# EUROPEAN PATENT SPECIFICATION

(11) **EP 1 054 713 B1**
(45) Date of publication and mention of the grant of the patent: **21.05.2003**
(21) Application number: 99901857.5
(22) Date of filing: 04.02.1999
(51) Int. Cl.: A63F 13/12, A63F 13/00

(54) **INTERACTIVE GAMING SYSTEM**
INTERAKTIVES SPIELSYSTEM
SYSTEME DE JEU INTERACTIF

(30) Priority: 09.02.1998 EP 98400285
(43) Date of publication of application: 29.11.2000
(73) Proprietor: Canal+ Technologies, 75015 Paris (FR)
(72) Inventor: AGASSE, Bernard, F-95610 Eragny (FR); BAYASSI, Mulham, F-75015 Paris (FR)
(74) Representative: Cozens, Paul Dennis
(86) International application number: IB9900275
(87) International publication number: WO99039791

(56) References cited:
- WO-A-95/01060
- US-A- 4 815 741
- US-A- 5 539 822
- US-A- 5 634 848
- US-A- 5 697 844

## Description

The present invention relates to an interactive gaming and digital audiovisual transmission system, in particular a gaming and digital television transmission system.

Broadcast transmission of digital data is well-known in the field of pay TV systems, where scrambled audiovisual information is sent, usually by a satellite or satellite/cable link, to a number of subscribers, each possessing a decoder capable of descrambling the transmitted program for subsequent viewing. Terrestrial digital broadcast systems are also known. Recent systems have also used the broadcast link to transmit other data, in addition to or as well as audiovisual data, such as computer programs or interactive applications to the decoder or to a connected PC.

The increasing sophistication of such technology, in particular in relation to the receiver/decoder devices used in the systems, has led to an increase in the possible services that may be provided thereby. In particular, a number of systems have been proposed using interactive technology to enable a viewer to, for example, participate in a quiz show, or to select further information regarding a product currently being displayed on a shopping channel.

In the case of gaming applications, a number of largely theoretical systems have been proposed to enable a viewer to gamble a sum of money on the outcome of a sporting event or casino-type game broadcast over a television network. In most of these systems, a viewer is usually obliged to open an initial account with the controlling gaming authority by phoning or mailing a money transfer to the gaming authority before any gambling can be carried out. The disadvantages of this sort of procedure will be apparent.

Alternative systems are also known, in which the viewer buys credits to be gambled in the form of an electronic purse, i.e. a smart card or the like, the credits in the purse being available for subsequent gaming operations. The card is inserted in the decoder and the credits used thereafter in the subsequent gaming operations. When the contents of the purse are exhausted, the viewer buys a new card or re-charges the card at a suitable sales point. This system again implies a certain infra-structure to be put in place to enable a user to obtain the necessary credits to be gambled.

The present invention seeks to overcome some or all of the disadvantages of these prior art systems.

US 4,815,741 describes an apparatus and method for automated marketing and gaming wherein a player inserts an identification card into an automated remote interface device and accesses an account at a subject financial institution. The user identifier provides access to the financial account, and a user indicia is compared to a game indicia. In one form a sweepstakes processor compares the user and game indicia to determine whether a selected winning correlation is present between the game indicia and user indicia.

WO 95/01060 describes an interactive television distribution system which includes a central processing station having a source of programming, a central minicomputer configured to manage a variety of interactive television applications including digitally encoded video, and audio signals and other digital data, and a receiver/processor unit. The system includes a card reader to download credit card data directly into the system.

According to the present invention, there is provided an interactive gaming and audiovisual transmission system comprising:
a central gaming computer means for processing gaming data; and
a receiver/decoder for receiving broadcast audiovisual data relating to a broadcast event, and for receiving from the central gaming computer means gaming data relating to the broadcast event; the receiver/decoder including:
   a subscription card reading device for interacting with a user's subscription card for providing user access to a broadcast event;
   a bank card reading device for interacting with a user's bank card to read data stored thereon; and
   a modem for communicating data read from the user's bank card to a communications server connected to a bank server holding the user's bank account for transferring in response to said data credit from the user's bank account to a gaming account at the central gaming computer means in order to permit gaming in relation to the broadcast event.

In this way, the present invention enables a user to simply and quickly open and credit a gaming account from the comfort of his home, avoiding the more elaborate payment methods of the known systems. The provision of two card reader devices in the receiver/decoder permits the receiver/decoder to carry out credit transactions on a bank card inserted in one reader whilst a subscription card is held in the second reader.

The type of bank card used in this transaction may be of the debit or credit type. The bank card may be in the form of a smart card. The central gaming computer means may be provided by a gaming system server.

In one realisation, the receiver/decoder may be adapted to obtain transfer of credit information in the form of an electronic certificate generated by the bank card in response to transaction data submitted by the receiver/decoder. This transaction information may include, for example, the details of the bank account of the gaming authority to be credited in the operation, the sum of money to be transferred etc.

Typically, data is entered by the user into the receiver/decoder using a handheld remote control. In the case where a credit transaction is to be carried out, it may be necessary to enter the bank card PIN number using the remote control. In one embodiment, the receiver/decoder is provided with a handheld remote control, some or all of the data sent to the receiver/decoder being encrypted by the handheld remote control and subsequently decrypted by the receiver/decoder. In this way, interception by third parties of sensitive data emitted by the remote control may be avoided.

The communications server may further be adapted to communicate with the central gaming computer means, for example, to inform the central gaming computer means of a transfer of credit instruction being forwarded from the communications server to a bank computer, so as to permit the central gaming computer means to set up an account without having to verify the transaction carried out at an associated bank server.

The central gaming computer means may equally be adapted to receive and transmit credit information to or from a bank server via a network communication link. This may be necessary, for example, in the case of a win or in order to verify the transfer of funds from the bank account of a user to the gaming authorities bank account before opening a gaming account.

Preferably, the receiver/decoder is adapted to communicate gaming information to the central gaming computer means during gaming operation via a network communication link. This may be the same link as used to communicate transfer of credit information to a bank computer, for example, using the modem device.

Some or all of the gaming information communicated from the receiver/decoder to the central gaming computer means during gaming operation may be encrypted by the receiver/decoder. For example, the receiver/decoder may be adapted to transmit in encrypted form a code word entered by the user associated with the gaming account of the user held by the central gaming computer means.

The receiver/decoder may be adapted to directly communicate information to the central gaming computer means during gaming operation. However, preferably, the communications server is adapted to receive information communicated from the receiver/decoder during gaming operation and to forward this information on to the central gaming computer means.

In the case where gaming information is encrypted by the receiver/decoder, the communications server may be adapted to simply pass this information "as is" to the central gaming computer means. However, in one embodiment, the communications server is adapted to decrypt information received from the receiver/decoder and to re-crypt this information for subsequent communication to the central gaming computer means. This may be required, for example, in the case where different encryption algorithms are used by the receiver/decoder and central gaming computer means.

The communications server may further be adapted to communicate information to and from other computer devices, for example, computer databases holding TV subscriber information. In this way, the communications server may obtain directly information regarding the user of the system (name, address etc) to be used in setting up a gaming account, without the user having to re-enter the same information.

The communication means used to transmit gaming data from the central gaming computer means to the receiver/decoder may be defined in a number of different ways and by a number of different communication elements. For example, some or all of the gaming data sent from the central gaming computer means to the receiver/decoder may be transmitted via a transmitter means, or transmitter, used to transmit audiovisual data to the decoder.

In addition, or alternatively, some or all of the gaming data sent from the central gaming computer means to the receiver/decoder may be sent via the communications server.

In practice, a mixture of these two communication paths may prove optimal, the network path being used for rapid dialogue between the receiver/decoder and the central gaming computer means during real-time operation and the transmission path being used for relatively fixed data, such as screen format display data or the like.

As mentioned above the system may be used to permit gaming in relation to various events. For example, the central gaming computer means may be adapted to generate a computer game (computer blackjack or the like), the computer generated images being transmitted via the audiovisual link to the receiver/decoder.

However, as will be appreciated, the combination of gaming and audiovisual systems makes the present invention particularly adapted to permit gaming in relation to televised sports, such as horse racing or the like. In one embodiment, the present invention comprises a central gaming computer means adapted to provide gaming data related to a real-time sporting event, the decoder being adapted to receive both gaming data and associated audiovisual data of the event.

The present invention extends to a method of enabling interactive gaming in relation to a broadcast audiovisual event, said method comprising the steps of:
receiving broadcast audiovisual data relating to a broadcast event, and from a central gaming computer means gaming data relating to the broadcast event;
interacting with a user's subscription card for providing user access to a broadcast event;
interacting with a user's bank card to read data stored thereon; and
communicating data read from the user's bank card to a communications server connected to a bank server holding the user's bank account for transferring in response to said data credit from the user's bank account to a gaming account at the central gaming computer means in order to permit gaming in relation to the broadcast event.

Analogous method features to the system features described above are also provided.

In the context of the present application the term «audiovisual transmission system» refers to all transmission systems for transmitting or broadcasting primarily audiovisual or multimedia digital data. The present invention is particularly, but not exclusively, applicable to a broadcast digital television system.

In this application the term « smart card » is used to mean any conventional chip-based card device possessing, for example, microprocessor and/or memory storage. Also included in this term are chip devices having alternative physical forms, for example key-shaped devices such as are often used in TV decoder systems.

In the present application, the term "decoder" is used to apply to an integrated receiver/decoder for receiving and decrypting an encrypted transmission, the receiver and decoder elements of such a system as considered separately, as well as to a receiver capable of receiving non-encrypted broadcasts. The term equally covers decoders including additional functions, such as web browsers, together with decoder systems integrated with other devices, for example, integrated VHS/decoder devices or the like.
Figure 1 shows the overall architecture of a digital television system, as may be incorporated in the gaming system of the present invention;
Figure 2 shows the conditional access system of the television system of Figure 1;
Figure 3 shows the structure of the decoder of Figures 1 and 2;
Figure 4 shows a gaming system incorporating the television system of Figures 1 and 2; and
Figure 5 shows a flow diagram of the logical steps involved in a gaming transaction.

### Digital Television System

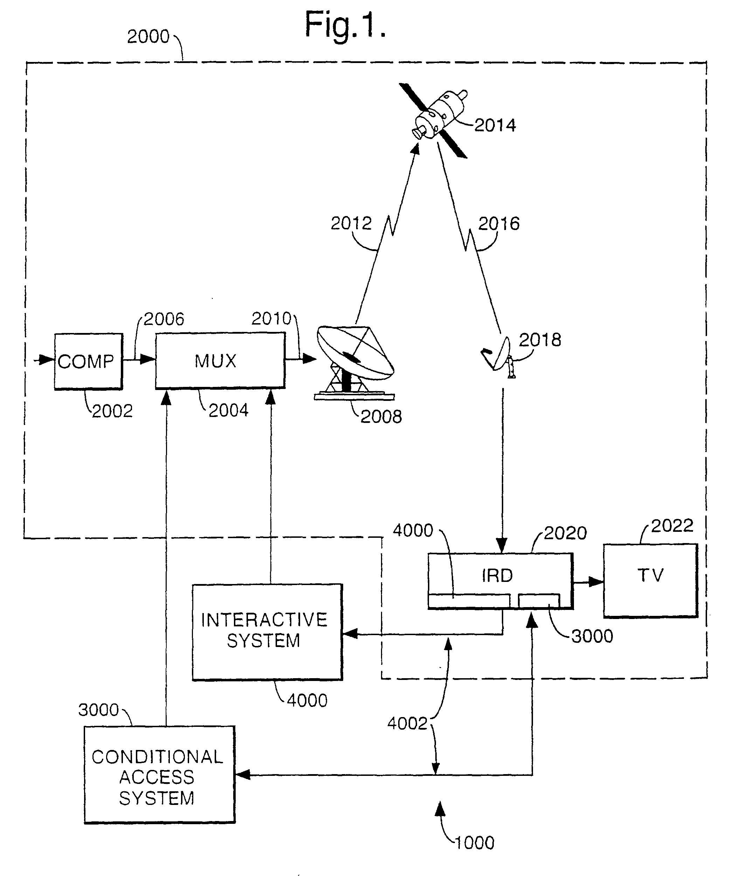

An overview of a digital television broadcast and reception system 1000 adaptable to the present invention is shown in Figure 1. The system includes a mostly conventional digital television system 2000, which uses the known MPEG-2 compression system to transmit compressed digital signals. In more detail, the MPEG-2 compressor 2002 in a broadcast centre receives a digital signal stream (typically a stream of video signals). The compressor 2002 is connected to a multiplexer and scrambler 2004 by linkage 2006. The multiplexer 2004 receives a plurality of further input signals, assembles one or more transport streams and transmits compressed digital signals to a transmitter 2008 of the broadcast centre via linkage 2010, which can of course take a wide variety of forms including telecom links.

The transmitter 2008 transmits electromagnetic signals via uplink 2012 towards a satellite transponder 2014, where they are electronically processed and broadcast via notional downlink 2016 to earth receiver 2018, conventionally in the form of a dish owned or rented by the end user. The signals received by receiver 2018 are transmitted to an integrated receiver/decoder 2020 owned or rented by the end user and connected to the end user's television 2022. The receiver/decoder 2020 decodes the compressed MPEG-2 signal into a television signal for the television set 2022.

A conditional access system 3000 is connected to the multiplexer 2004 and the receiver/decoder 2020, and is located partly in the broadcast centre and partly in the decoder. It enables the end user to access digital television broadcasts from one or more broadcast suppliers. A smart card, capable of decrypting messages relating to commercial offers (that is, on or several television programmes sold by the broadcast supplier), can be inserted into the receiver/decoder 2020. Using the decoder 2020 and smart card, the end user may purchase events in either a subscription mode or a payper-view-mode.

An interactive system 4000, also connected to the multiplexer 2004 and the receiver/decoder 2020 and again located partly in the broadcast and partly in the decoder, enables the end user to interact with various applications via a modemmed back channel 4002. Such interactive applications may include an interactive shopping service, a quiz application, an interactive programme guide etc.

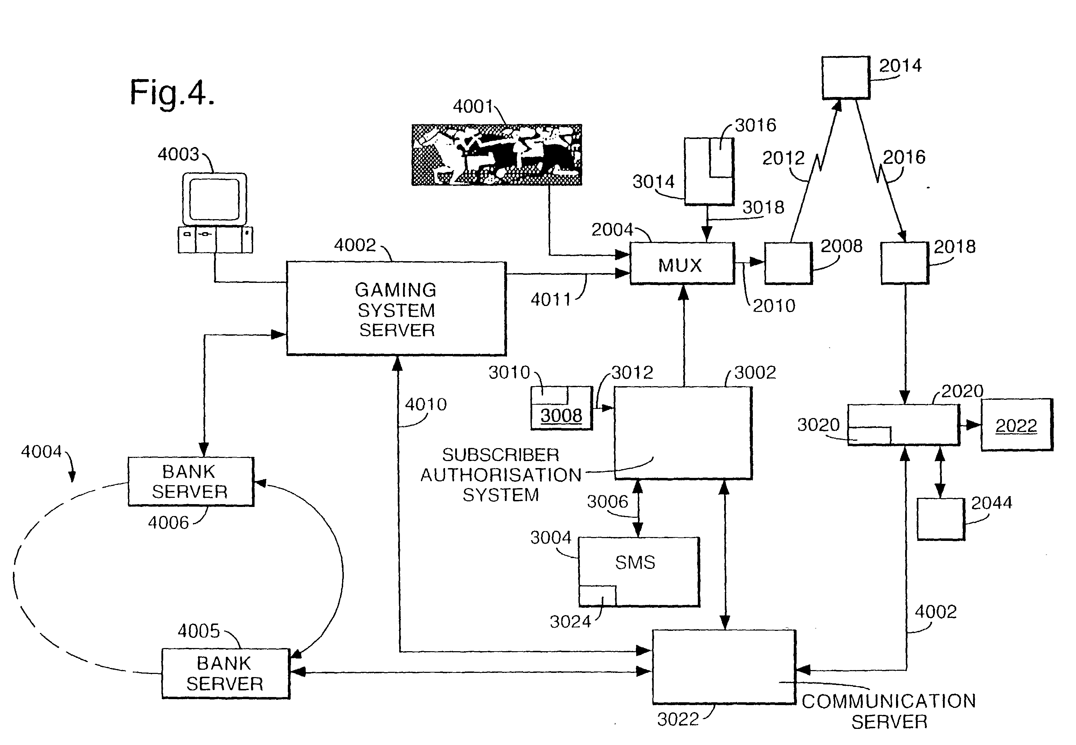

In point of fact, whilst the interactive system 4000 has been represented as a discrete logical block, the physical elements of this system, such as the server or servers used to handle communications between the receiver/decoder and central servers, may be elements shared with the conditional access system 3000. This will become clear in the description of the gaming system of Figure 4.

### Conditional Access System

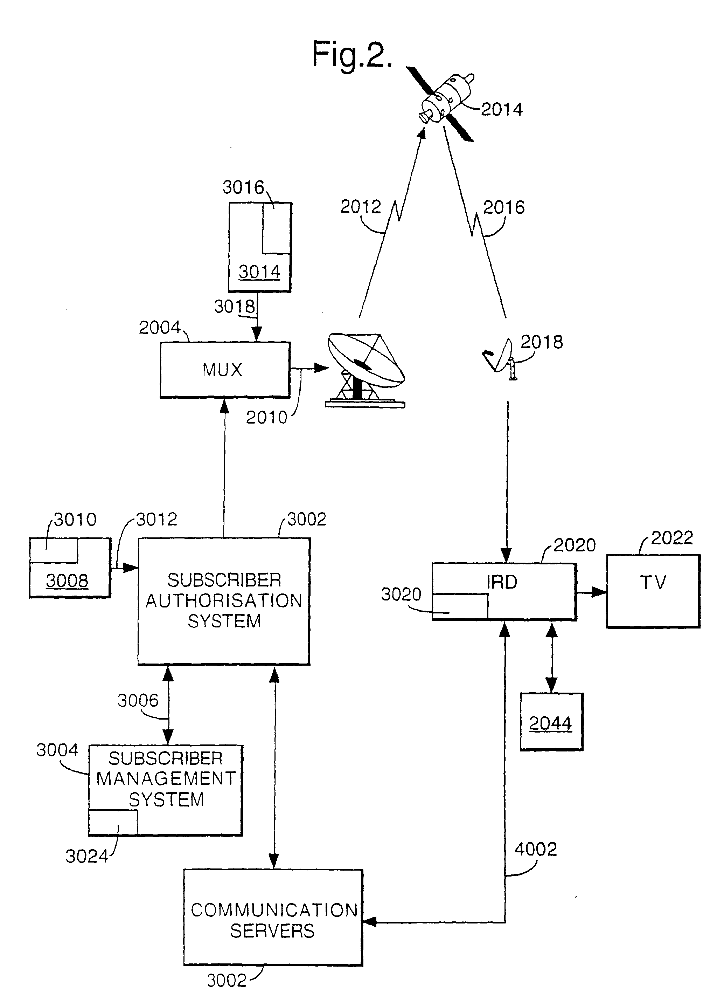

With reference to Figure 2, the conditional access system 3000 includes a Subscriber Authorization System (SAS) 3002. The SAS 3002 is connected to one or more Subscriber Management Systems (SMS) 3004, one SMS for each broadcast supplier, by a respective TCP-IP link 3006 (although other types of linkage could alternatively be used). Alternatively, one SMS could be shared between two broadcast suppliers, or one supplier could use two SMSs, and so on.

First encrypting units in the form of ciphering units 3008 utilising « mother » smart cards 3010 are connected to the SAS by linkage 3012. Second encrypting units again in the form of ciphering units 3014 utilising mother smart cards 3016 are connected to the multiplexer 2004 by linkage 3018. The receiver/decoder 2020 receives a « daughter » smart card 3020. It is connected directly to the SAS 3002 by Communications Servers 3022 via the modemmed back channel 4002. The SAS sends amongst other things subscription rights to the daughter smart card on request.

The smart cards contain the secrets of one or more commercial operators. The « mother » smart card encrypts different kinds of messages and the « daughter » smart cards decrypt the messages, if they have the rights to do so.

The first and second ciphering units 3008 and 3014 comprise a rack, an electronic VME card with software stored on an EEPROM, up to 20 electronic cards and one smart card 3010 and 3016 respectively, for each electronic card, one (card 3016) for encrypting the ECMs and one (card 3010) for encrypting the EMMS.

Also shown in Figure 2 is a handheld remote control used by the viewer to control and program functions of the receiver/decoder 2020.

### Multiplexer and Scrambler

With reference to Figures 1 and 2, in the broadcast centre, the digital video signal is first compressed (or bit rate reduced), using the MPEG-2 compressor 2002. This compressed signal is then transmitted to the multiplexer and scrambler 2004 via the linkage 2006 in order to be multiplexed with other data, such as other compressed data.

The scrambler generates a control word CW used in the scrambling process and included in the MPEG-2 stream in the multiplexer 2004. The control word CW is generated internally and enables the end user's integrated receiver/decoder 2020 to descramble the programme. Access criteria, indicating how the programme is commercialised, are also added to the MPEG-2 stream. The programme may be commercialised in either one of a number of « subscription » modes and/or one of a number of << Pay Per View >> (PPV) modes or events.

In the subscription mode, the end user subscribes to one or more commercial offers, of « bouquets », thus getting the rights to watch every channel inside those bouquets. In the preferred embodiment, up to 960 commercial offers may be selected from a bouquet of channels. In the Pay Per View mode, the end user is provided with the capability to purchase events as he wishes. This can be achieved by either pre-booking the event in advance (« pre-book mode »), or by purchasing the event as soon as it is broadcast (« impulse mode »).

Both the control word CW and the access criteria are used to build an Entitlement Control Message (ECM); this is a message sent in relation with a scrambled program. The message contains a control word (which allows for the descrambling of the program) and the access criteria of the broadcast program. The access criteria and control word are transmitted to the second encrypting unit 3014 via the linkage 3018. In this unit an ECM is generated, encrypted with an exploitation key Cex and transmitted on to the multiplexer and scrambler 2004.

### Programme Transmission

The multiplexer 2004 receives encrypted EMMs from the SAS 3002, encrypted ECMs from the second encrypting unit 3014 and compressed programmes from the compressor 2002. The multiplexer 2004 scrambles the programmes and communicates the scrambled programmes, the encrypted EMM (if present) and the encrypted ECMs to a transmitter 2008 of the broadcast centre via linkage 2010. The transmitter 2008, transmits electromagnetic signals towards the satellite transponder 2014 via uplink 2012.

### Programme Reception

The satellite transponder 2014 receives and processes the electromagnetic signals transmitted by the transmitter 2008 and transmits the signals on to the earth receiver 2018, conventionally in the form of a dish owned or rented by the end user, via downlink 2016. The signals received by receiver 2018 are transmitted to the integrated receiver/decoder 2020 owned or rented by the end user and connected to the end user's television set 2022. The receiver/decoder 2020 demultiplexes the signals to obtain scrambled programmes with encrypted EMMs and encrypted ECMs.

If the programme is not scrambled the receiver/decoder 2020 decompresses the data and transforms the signal into a video signal for transmission to television set 2022.

If the programme is scrambled, the receiver/decoder 2020 extracts the corresponding ECM from the MPEG-2 stream and passes the ECM to the « daughter » smart card 3020 of the end user. This slots into a housing in the receiver/decoder 2020. The daughter smart card 3020 controls whether the end user has the right to decrypt the ECM and to access the programme. If not, a negative status is passed to the receiver/decoder 2020 to indicate that the programme cannot be descrambled. If the end user does have the rights, the ECM is decrypted and the control word extracted. The decoder 2020 can then descramble the programme using this control word. The MPEG-2 stream is decompressed and translated into a video signal onward transmission to television set 2022.

### Subscriber Management System (SMS)

A Subscriber Management System (SMS) 3004 includes a database 3024 which manages, amongst others, all of the end user files, commercial offers (such as tariffs and promotions), subscriptions, PPV details, and data regarding end user consumption and authorization. The SMS may be physically remote from the SAS

Each SMS 3004 transmits messages to the SAS 3002 via respective linkage 3006 to enable modifications to or creations of Entitlement Management Messages (EMMs) to be transmitted to end users.

The SMS 3004 also transmits messages to the SAS 3002 which imply no modifications or creations of EMMs but imply only a change in an end user's state (relating to the authorization granted to the end user when ordering products or to the amount that the end user will be charged).

### Entitlement Management Messages and Entitlement Control Messages

ECMs or Entitlement Control Messages are encrypted messages embedded in the data stream of a transmitted program and which contain the control word necessary for descrambling of part or all of a program. Authorisation of a given receiver/decoder is controlled by EMMs or Entitlement Management Messages, transmitted on a less frequent basis and which supply an authorised receiver/decoder with the exploitation key necessary to decode the ECM.

An EMM is a message dedicated to an individual end user (subscriber), or a group of end users. A group may contain a given number of end users. This organisation as a group aims at optimising the bandwidth; that is, access to one group can permit the reaching of a great number of end users.

Various specific types of EMM may be used. Individual EMMs are dedicated to individual subscribers, and are typically used in the provision of Pay Per View services. So-called « Group » subscription EMMs are dedicated to groups of, say, 256 individual users, and are typically used in the administration of some subscription services. This EMM has a group identifier and a subscribers' group bitmap

For security reasons, the control word CW embedded in an encrypted ECM changes on average every 10 seconds or so. In contrast, the exploitation key Cex used by the receiver to decode the ECM is changed every month or so by means of an EMM. The exploitation key Cex is encrypted using a personalised key corresponding to the identity of the subscriber or group of subscribers recorded on the smart card. If the subscriber is one of those chosen to receive an updated exploitation key Cex, the card will decrypt the message using its personalised key to obtain that month's exploitation key Cex.

The operation of EMMs and ECMs will be well-known to one skilled in the art and will not be described here in any more detail.

### Receiver/Decoder Structure

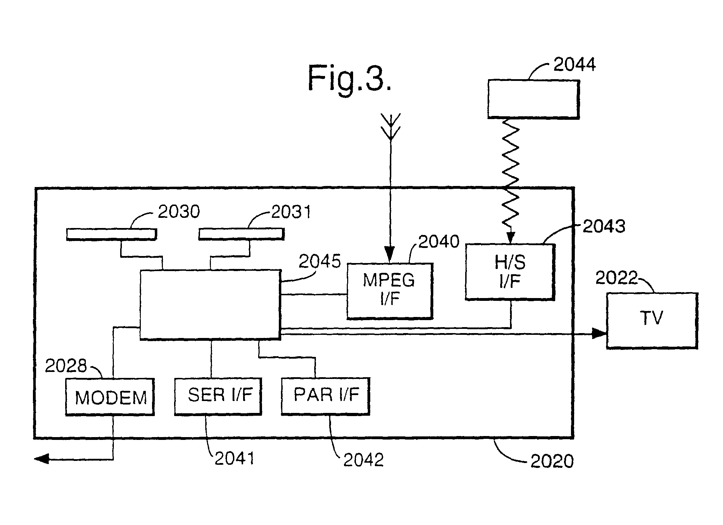

Referring to Figure 3, the elements of a receiver/decoder 2020 or set-top box for use in a digital broadcast system and adapted to be used in the present invention will now be described. As will be understood, the elements of this decoder are largely conventional and their implementation will be within the capabilities of one skilled in the art.

As shown, the decoder 2020 is equipped with several interfaces for receiving and transmitting data, in particular an MPEG tuner and demultiplexer 2040 for receiving broadcast MPEG transmissions, a serial interface 2041, a parallel interface 2042, and a modem 2028 for sending and receiving data via the telephone network. In this embodiment, the decoder also includes a first and second smart card reader 2030 and 2031, the first reader 2030 for accepting a subscription smart card containing decryption keys associated with the system and the second reader 2031 for accepting bank and other cards. As will be described, the use of a two-slot decoder, adapted to read bank cards, is an important aspect in the implementation of the gaming system of Figure 4.

The decoder also includes a receiver 2043 for receiving infra-red control signals from the handset remote control 2044 and a Peritel output for sending audiovisual signals to a television 2022 connected to the decoder. In certain cases it may be desired that the infra-red signals transmitted from the handset 2044 to receiver 2043 are subject to a simple scrambling/descrambling process to ensure that no useful information may be obtained by any third party monitoring the transmission.

Such algorithms will not be described in any detail, but may comprise, for example a symmetric algorithmic key known to both handset 2044 and receiver/decoder 2020. This may be varied from time to time, for example, by means of a modulating random number chosen by the receiver/decoder 2020 and displayed by the television 2022, the user then programming the handset 2044 with this number to ensure that the handset scrambles entered data using an encryption algorithm key equivalent to that used the receiver/decoder to decrypt the received infra-red signals.

Processing of digital signals received via the interfaces and generation of digital output signals is handled by a central control unit 2045. The software architecture of the control unit within the decoder may correspond to that used in a known decoder and will not be described here in any detail. It may be based, for example, on a virtual machine interacting via an interface layer with a lower level operating system implemented in the hardware components of the decoder. In terms of the hardware architecture, the decoder will be equipped with a processor, memory elements such as ROM, RAM, FLASH memory etc. as in known decoders.

Applications processed by the control unit 2045 may be resident applications stored in the ROM or FLASH of the decoder or applications broadcast and downloaded via the MPEG interface 2 of the decoder. Applications can include program guide applications, games, interactive services, teleshopping applications, as well as initiating applications to enable the decoder to be immediately operational upon start-up and applications for configuring the decoder. Applications are stored in memory locations in the decoder and represented as resource files comprising graphic object description files, unit files, variables block files, instruction sequence files, application files, data files etc.

Conventionally, applications downloaded into the decoder via the broadcast link are divided into modules, each module corresponding to one or more MPEG tables. Each MPEG table may be divided into a number of sections. For data transfer via the serial and parallel ports, modules are also split into tables and sections, the size of the section depending on the channel used.

In the case of broadcast transmission, modules are transported in the form of data packets within respective types of data stream, for example, the video data stream, the audio data stream, a text data stream. In accordance with MPEG standards each packet is preceded by a Packet Identifier (PID) of 13 bits, one PID for every packet transported in the MPEG stream. A programme map table (PMT) contains a list of the different streams and defines the content of each stream according to the respective PID. A PID may alert the device to the presence of applications in the data stream, the PID being identified by the PMT table.

### Gaming System Architecture

Referring now to Figure 4, there will now be described the elements and functioning of a gaming system according to an embodiment of the present invention. The gaming system includes the elements of the digital television system described and shown in Figures 1 and 2, which have been assigned the same reference numerals . Some elements, such as the digital compressor 2002 shown in Figure 1, have been omitted in order to focus on those aspects of the system which are pertinent to the present invention.

As shown, the gaming system additionally comprises a source of audiovisual information 4001 regarding the event which will form the subject of betting etc within the system. In the present case, the event has been represented as a horse race, and the present system is indeed particular adapted to gaming activities centred around televised live action sporting events. However, as will be understood, the present system may equally used to permit gambling in relation to other events, such as casino-type games, as well as computer generated games, pre-recorded events etc.

The system further comprises a central gaming computer means in the form of a gaming system server 4002, together with associated operating terminal or terminals 4003, adapted to generate odds, calculate winnings etc in relation to the gaming event. The gaming server 4002 is adapted to communicate with a receiver/decoder 2020 via the intermediate communication server or servers 3022. The connection between the gaming server 4002 and communication server 3022 may be implemented by an X25 Transpac link or via a dedicated line. The network link for the server is indicated broadly at 4010.

As described above, the communication server 3022 communicates with the receiver/decoder 2020 by means of a telephone link using the in-built modem of the receiver/decoder.

The gaming server may be equally adapted to send information to the receiver/decoder 2020 via a satellite link, indicated broadly at 4011, by injection of information into the multiplexer 2004 for subsequent integration in the transmitted MPEG stream.

As will be understood, all communications from the receiver/decoder 2020 to the gaming server 4002 are via the receiver/decoder modem and communication server 3022. In the case of communications from the gaming server 4002 to the receiver/decoder 2020, the choice of communication channel and communication means (MPEG satellite transmission or communication server/modem connection) may depend on the nature of the information to be transmitted.

Typically, the satellite link 4011 will be used to send data or information that may be updated on a daily basis or which may be received by any number of receiver/decoders in the park (odds for tomorrow's races etc). In particular, the satellite link may be used to download the application that needs to be installed in the receiver/decoder to enable the receiver/decoder to function in the gaming system.

In contrast, the modem link 4010 may be preferred for data that changes on a minute-by-minute basis or that is specific to a particular user (results of last race, current state of the account of the user etc).

In addition to handling gaming activities resulting from bets placed via the receiver/decoder 2020, for example as programmed in using the remote control 2044, the gaming server 4002 may also be adapted to manage bets to be placed by other input means, for example as placed by a phone service or as received by a "Minitel" type system, as used in France and other countries.

The gaming system server 4002 is additionally connected to a bank server network 4003 comprising one or more bank servers 4005, 4006. The bank server network may correspond to an existing network used to handle electronic payment transactions. The level of security and encryption in the communications between each of the elements of the gaming system will be described in more detail below in relation to the operation of the system.

### Gaming System Operation

As mentioned in the introduction of the present application, gaming systems used in interactive television systems proposed to date have tended to use relatively laborious methods for settling accounts between the viewer and the central gaming authority, requiring the viewer either to pay by a conventional method (cheque, telephone credit transfer etc) or to physically purchase an "electronic purse" in the form of a smart card or key containing a number of pre-paid credits that may be gambled.

The present embodiment differs from such systems in proposing a system architecture that enables a viewer to pay by means of a credit or debit card inserted in the decoder and by entering data into the system by means of the hand-held remote control. As mentioned above, the provision of a decoder provided with two distinct card readers 2030, 2031 enables the decoder to simultaneously hold a subscription card containing the viewers access rights (eg to the gaming channel) as well as interacting with a credit/debit card inserted in the decoder.

In order to comply with regulations concerning the use of credit/debit cards in gambling transactions, two different types of transactions need to be distinguished: (i) opening or re-crediting an account managed by the gaming system server and (ii) gambling the sums in this account.

### Opening an account

In the present case, the card reader 2031 functions in a similar manner to a standard card reader used in banking terminals and the like to read and write data on a smart card presented in the reader. As with all card readers used in the banking field, communication between the terminal (in this case the decoder) and external servers is prohibited during the time that the card is being accessed by the terminal, i.e. for the time that the memory zones on the card are "open".

In order to open and credit an account with the gaming system server, the following steps are carried out during a first phase:
a) Using the handheld remote control, and as guided by the application loaded in the receiver/decoder, the user selects the option "open an account" and enters the sum of money that he wishes to transfer to this account.
b) After having introduced his credit card into the card reader slot 2031, the viewer is invited to enter his personal PIN code. The user has a maximum of two opportunities to enter the code, after which the receiver/decoder will refuse to accept any further entries and the transaction will be abandoned.
   Note that in the case of sensitive information communicated to the receiver/decoder by the handset (in particular the PIN code) the data entered by the user on the key pad of the handset may be scrambled before transmission between the handset and decoder so as to prevent interception of this information by any third party. See above.
c) Assuming the code is correct, the smart card downloads certain information in response to a request from the receiver/decoder, including details of the last transactions, to enable the decoder to verify that the sum of transactions during a certain period is within, for example, the transaction limit of the card holder for that period.
d) The receiver/decoder then passes to the smart card information regarding the current transaction including the amount of the transaction, the date and time of the transaction, the details of the bank account to be credited in the transaction and so on. (The details of the account to be credited can be obtained by the decoder prior to the interrogation of the card from the gaming system server or the intermediate communications system server).
e) In the conventional manner, the smart card then calculates a first numeric certificate using this information, which is communicated to the receiver/decoder. The receiver/decoder writes the present transaction in the card and a second numeric certificate is calculated and communicated to the receiver/decoder. The memory zones of the smart card are then closed off.
   The generation of a pair of numeric certificates is a specific security measure associated with the use of a receiver/decoder as transaction terminal.
   Once the above steps have been carried out, the system then moves to a second phase involving communication between the receiver/decoder 2020, the intermediate communication server 3022 and the bank server 4005.
f) Before transferring any information, the receiver/decoder 2020 verifies the identity of the communication server 3022 by means of a public/private key system (eg using the RSA algorithm). In particular, the receiver/decoder generates a random number, which is transmitted to the server for encryption by a private key and returned to the receiver/decoder, which checks the encrypted value using the equivalent public key.
   A simple handshake signal may also be provided by the decoder 2020 to identify itself to the server 3022.
g) Assuming the identity of the communication server is verified, the receiver/decoder 2020 sends to the communication server 3022 the details of the transaction to be carried out, including the first and second numeric certificates generated by the smart card.
h) The communication server 3022 then sends the transaction details to the first bank server 4005, which verifies the account of the user, and authorises (or not) the transaction and sends an acknowledgement of the transaction to the communication server. The transfer of money between the user's account and that of the central gaming authority will then be handled within the bank network 4004.
i) Once the communication server 3022 has received acknowledgement of the acceptation of the monetary transfer, a message will be sent to the receiver/decoder 2020 of the completion of the transfer and the operation will proceed to the next phase.
   Note that the same steps a) to i) as used in the first two phases will also be carried out in the event that the user wishes to increase the credit in an existing gaming account.
   The next phase in the opening of a gaming account involves communication between the receiver/decoder 2020, the communication server 3022 (and the SAS and SMS servers 3002, 3004) and the gaming server 4002. The information communicated between these servers is largely non-sensitive and may be communicated in clear, with the exception of the code word chosen by the user to obtain access to his gaming account.
j) Using the information (name, address etc) on the user held in the SAS and SMS servers 3002, 3004, the communication server prepares a request for opening of an account with the gaming system server 4002. This information has been gathered in the SMS server during the original procedure carried out when the user originally subscribed to the television service. The user is thus spared the inconvenience of repeating all this information when subscribing to the gaming service.
   Note that in the event that SMS database reveals, for example, that the subscriber is in debt with the television service, the communication server may abort the opening of an account with the gaming service. This extra verification step may be carried out earlier, for example, at step g).
k) In one embodiment, the communication server 3022 may send the subscriber information to the receiver/decoder 2020 where it is displayed on the television 2022 for verification by the user. Once verified, the information is sent to the gaming system server 4002 where a gambling account is created by the server 4002.
l) The account information (account number etc) is then sent from the gaming server 4002, via the communication server 3022, to the receiver/decoder 2022. The user is then invited to choose a suitable code word for the account which will be demanded by the system at every opening of a gaming session. As for the PIN number, the infra-red signal containing this information and sent between the remote control and the decoder may be scrambled by the remote control to avoid interception and descrambled by decoder.
m) The code word is then encrypted by a public key of a public/private key pair held in the receiver/decoder 2020 and sent to the communication server 3022, where it is decrypted by the corresponding private key. In this case, for example, the same RSA key pair as used for the verification of the communication server may be used.
n) The code word is then re-encrypted by the communication server 3022 and sent to the gaming system server 4002 where it is decrypted and assigned to the user's account. In this case, a symmetric key algorithm, such as DES, may be advantageously used, for example, to permit two-way encrypted communication between the communication server 3022 and gaming server 4002.

### Gambling with an existing gaming account

Once the user has set up and credited a gaming account with the gaming server 4002, all future gambling transactions will be handled between the receiver/decoder 2020 and the gaming system server 4002. At the start of every gaming session, the system server 4002 will demand the user's assigned code word, which will be communicated between the receiver/decoder and the gaming server, via the communications server, as described above.

For simplicity, and in order to permit a relatively rapid dialogue, all questions and responses between the user and the gaming system in order to place a bet and receive the results are preferably passed via the telephone/modem link and the communication server 3022. Certain data, such as the format of the screens displayed by the receiver/decoder in gaming mode and/or slowly changing or universal data (details of that day's races, the horses taking part etc) may be passed via the satellite uplink in order to take advantage of the bandwidth of this channel.

Other embodiments, in which data is shared between the two communication channels in alternative ways may nevertheless be envisaged, for example, where all communication from the receiver/decoder to the gaming system server passes via the modem link, whilst all communications from the server to the receiver/decoder pass via the satellite link.

As mentioned above, the present system may be used with a number of interactive gaming applications, for example, with computer games such as blackjack, poker or the like, in which the user places a bet on the outcome of a game managed by the gaming server. However, in view of the use of television broadcast technology, the system is particularly adapted to permit gaming in relation to live action sporting events, such as televised horse, dog or camel racing.

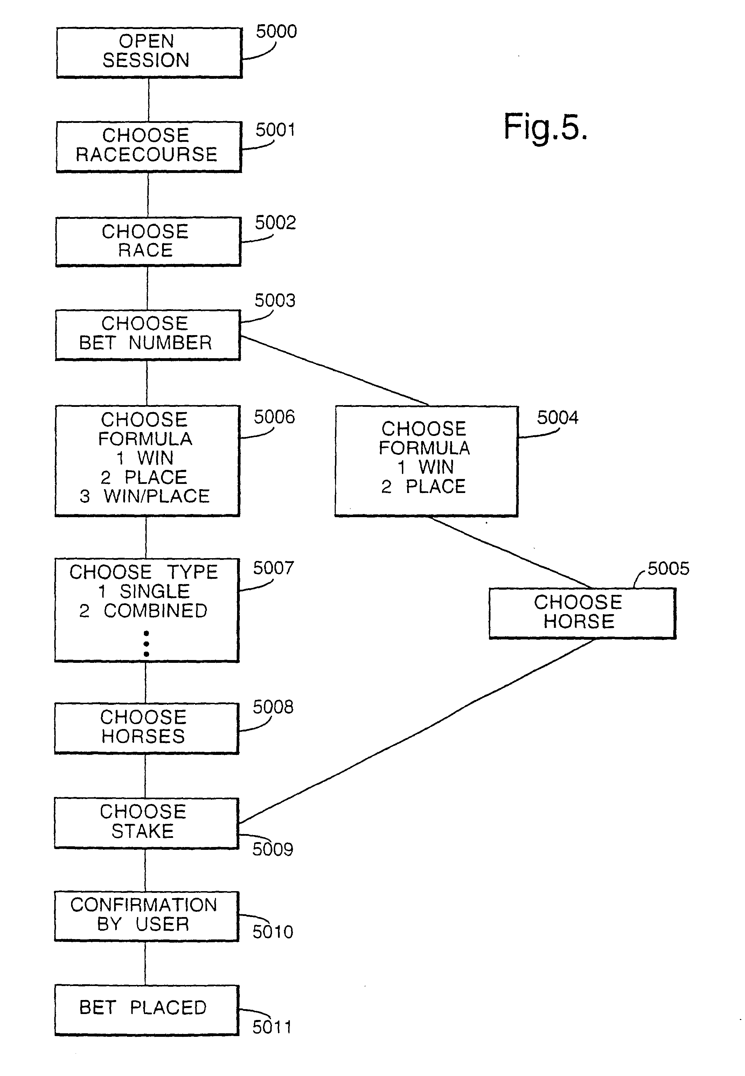

Figure 5 is a flow diagram of the steps involved in the placing of a bet in relation to one or more broadcast horse races. In the present case, the bet is to be placed in respect of the present day's races, i.e. in "real time", and the odds quoted for the horses may depend on the time at which the bet is taken. In alternative embodiments, bets may be placed the day or week before the race or races in question.

Firstly, at step 5000, the user enters his code word and opens a betting session. At steps 5001 and 5002, he chooses the racecourse he is interested in and one of the races running at that racecourse, respectively. Depending on which race is running, the user may be offered a number of different standard types of bet, from a simple bet to more complex bets, including main and side bets.

As will be appreciated, the bet types offered may be determined according to the wishes of the gaming authority and may be based on any of the usual types of bet offered for an event of this type.

At step 5003, the user chooses the type of bet he wishes to place. In the case of a simple bet on one horse, the next step will be step 5004 where the user chooses the formula of the bet, ie whether the horse will win or be placed in the first three or four positions. At step 5005, the user chooses the horse he wishes to bet on.

In the case of a complex bet, the user then chooses from a combination of win, place or win/place at step 5007 and from one of a number of types of bet (single, combined, reduced field, full field) at step 5007. The user may decide, for example to choose one horse to win and/or one horse to be placed in the top three or four. Other combinations may be made presented to reflect the choice of bet normally available. At step 5008 the user chooses the horses he wishes to bet on.

At step 5009 the user chooses his stake, i.e. the sum to be extracted from the money deposited in his gaming account. At step 5010 confirmation of the stake to be gambled is demanded. At this time, the system may also indicate the overall odds for the bet or bets placed and the sum of money to be won. Assuming that the user confirms the bet, the bet is registered at step 5011.

Following the results of the race, the gaming system server calculates the winnings or losses for the user. These will be subtracted or added automatically to his gaming account. The user may demand at any time the position of his account.

In the event that the user eventually wishes to close the account or to transfer some of his winnings to his bank account, a message to this end may be sent by the user from the receiver/decoder 2020 to the gaming system server 4002 (Figure 4). At that time, the server 4002 will communicate with the bank server 4006 to organise a credit transfer to the user's bank account. Since the identity and bank details of the owner of the receiver/decoder are already known, the server will only transfer money from the gaming account of the user to the bank account originally used in the setting up of the gaming account.

It will be understood that the present invention has been described above purely by way of example, and modifications of detail can be made within the scope of the invention as defined in the appended claims.

Each feature disclosed in the description, and (where appropriate) the claims and drawings may be provided independently or in any appropriate combination.

In the aforementioned preferred embodiments, certain features of the present invention have been implemented using computer software. However, it will of course be clear to the skilled man that any of these features may be implemented using hardware. Furthermore, it will be readily understood that the functions performed by the hardware, the computer software, and such like are performed on or using electrical and like signals.

## Claims

1. An interactive gaming and audiovisual transmission system comprising:
a central gaming computer means (4002) for processing gaming data; and
a receiver/decoder (2020) for receiving broadcast audiovisual data relating to a broadcast event, and for receiving from the central gaming computer means (4002) gaming data relating to the broadcast event; the receiver/decoder including:
a subscription card reading device (2030) for interacting with a user's subscription card (3020) for providing user access to a broadcast event;
a bank card reading device (2031) for interacting with a user's bank card to read data stored thereon; and
a modem device (2028) for communicating data read from the user's bank card to a communications server (3022) connected to a bank server (4005) holding the user's bank account for transferring in response to said data credit from the user's bank account to a gaming account at the central gaming computer means (4002) in order to permit gaming in relation to the broadcast event.

2. An interactive gaming and audiovisual transmission system as claimed in claim 1, in which the data communicated to the communications server (3022) is in the form of an electronic certificate generated by the bank card in response to transaction data submitted by the receiver/decoder.

3. An interactive gaming and audiovisual transmission system as claimed in claim 1 or 2, in which the receiver/decoder (2020) is provided with a handheld remote control (2044) for sending data to the receiver/decoder, the handheld remote control (2044) being arranged to encrypt some or all of the data sent to the receiver/decoder (2020), the receiver/decoder being arranged to subsequently decrypt the encrypted data (2020).

4. An interactive gaming and audiovisual transmission system as claimed in any preceding claim, in which the communications server (3022) is adapted to communicate with the central gaming computer means (4002).

5. An interactive gaming and audiovisual transmission system as claimed in any preceding claim in which the central gaming computer means (4002) is adapted to receive and transmit credit information to or from the bank server (4005) via a network communication link.

6. An interactive gaming and audiovisual transmission system as claimed in any preceding claim in which the receiver/decoder (2020) is adapted to communicate gaming information to the central gaming computer means (4002) during gaming operation via said communications server (3022).

7. An interactive gaming and audiovisual transmission system as claimed in claim 6, in which the receiver/decoder (2020) is arranged to encrypt some or all of the gaming information communicated from the receiver/decoder (2020) to the central gaming computer means (4002) during gaming.

8. An interactive gaming and audiovisual transmission system as claimed in claim 7, in which the communications server (3022) is adapted to decrypt encrypted gaming information received from the receiver/decoder (2020) and to re-crypt this information for subsequent communication to the central gaming computer means (4002).

9. An interactive gaming and audiovisual transmission system as claimed in any preceding claim, comprising transmitter means (2008) for transmitting to the receiver/decoder (2020) said audiovisual data and some or all of said gaming data.

10. An interactive gaming and audiovisual transmission system as claimed in any of claims 1 to 8, in which said central gaming computer means is arranged to send some or all of the gaming data to the receiver/decoder (2020) via said communications server (3022).

11. An interactive gaming and audiovisual transmission system as claimed in any preceding claim in which said event comprises a real-time sporting event.

12. A method of enabling interactive gaming in relation to a broadcast audiovisual event, said method comprising the steps of:
receiving broadcast audiovisual data relating to a broadcast event, and from a central gaming computer means (4002) gaming data relating to the broadcast event;
interacting with a user's subscription card for providing user access to a broadcast event;
interacting with a user's bank card to read data stored thereon; and
communicating data read from the user's bank card to a communications server (3022) connected to a bank server (4005) holding the user's bank account for transferring in response to said data credit from the user's bank account to a gaming account at the central gaming computer means (4002) in order to permit gaming in relation to the broadcast event.

13. A method as claimed in claim 12, in which the data communicated to the communications server (3022) is in the form of an electronic certificate generated by the bank card in response to transaction data submitted thereto.

14. A method as claimed in claim 12 or 13, in which the central gaming computer means (4002) receives and transmits credit information to or from the bank server (4005) via a network communication link.

15. A method as claimed in any of claims 12 to 14, in which gaming information is communicated to the central gaming computer means (4002) during gaming operation via said communications server (3022).

16. A method as claimed in claim 15, in which some or all of the gaming information communicated to the central gaming computer means (4002) during gaming is encrypted.

17. A method as claimed in claim 16, in which the communications server (3022) decrypts received encrypted gaming information and re-crypts this information for subsequent communication to the central gaming computer means (4002).

18. A method as claimed in any of claims 12 to 17, wherein some or all of said gaming data is received with said audiovisual data.

19. A method as claimed in any of claims 12 to 17, in which some or all of the gaming data is received from the central gaming computer means (4002) via said communications server (3022).

20. A method as claimed in any of claims 12 to 19, in which said event comprises a real-time sporting event.

## Patentansprüche

1. Interaktives Spiel- und audiovisuelles Übertragungssystem, das Folgendes umfasst:
ein zentrales Spielcomputermittel (4002), um Spieldaten zu verarbeiten; und
einen Empfänger/Dekoder (2020), um gesendete audiovisuelle Daten zu empfangen, die sich auf ein Sendeereignis beziehen, und um von dem zentralen Spielcomputermittel (4002) Spieldaten zu empfangen, die sich auf das Sendeereignis beziehen; wobei der Empfänger/Dekoder Folgendes enthält:
eine Teilnehmerkarten- bzw. Abonnentenkarten-Lesevorrichtung (2030), um mit der Teilnehmerkarte bzw. Abonnentenkarte (3020) eines Benutzers zu interagieren, um einen Benutzerzugriff zu einem Sendeereignis bereitzustellen;
eine Bankkarten- bzw. Scheckkarten-Lesevorrichtung (2031), um mit der Bankkarte bzw. Scheckkarte eines Benutzers zu interagieren, um Daten, die darauf gespeichert sind, zu lesen; und
eine Modemvorrichtung (2028), um Daten, die von der Bankkarte bzw. Scheckkarte des Benutzers gelesen wurden, zu einem Kommunikationsserver (3022) zu übermitteln, der mit einem Bankserver (4005) verbunden ist, der das Bankkonto des Benutzers hält, um in Antwort auf die Daten einen Kredit bzw. ein Guthaben von dem Bankkonto des Benutzers auf ein Spielkonto bei einem zentralen Spielcomputermittel (4002) zu übertragen, um in Verbindung mit dem Sendeereignis ein Spielen zu erlauben.

2. Interaktives Spiel- und audiovisuelles Übertragungssystem wie in Anspruch 1 beansprucht, bei dem die Daten, die zu dem Kommunikationsserver (3022) übermittelt werden, in der Form eines elektronischen Zertifikats sind, das von der Bankkarte in Antwort auf Transaktionsdaten erzeugt wird, die von dem Empfänger/Dekoder übermittelt werden.

3. Interaktives Spiel- und audiovisuelles Übertragungssystem, wie in Anspruch 1 oder 2 beansprucht, bei dem der Empfänger/Dekoder (2020) mit einer tragbaren Fernbedienung (2044) versehen ist, um Daten zu dem Empfänger/Dekoder zu senden, wobei die tragbare Fernbedienung (2044) angeordnet bzw. ausgelegt ist, um gewisse oder alle Daten, die zu dem Empfänger/Dekoder (2020) gesendet werden, zu verschlüsseln, wobei der Empfänger/Dekoder angeordnet bzw. ausgelegt ist, um darauffolgend die verschlüsselten Daten (2020) zu entschlüsseln.

4. Interaktives Spiel- und audiovisuelles Übertragungssystem, wie in irgendeinem vorhergehenden Anspruch beansprucht, bei welchem der Kommunikationsserver (3022) angepasst ist, um mit dem zentralen Spielcomputermittel (4002) zu kommunizieren.

5. Interaktives Spiel- und audiovisuelles Übertragungssystem, wie in irgendeinem vorhergehenden Anspruch beansprucht, bei welchem das zentrale Spielcomputermittel (4002) angepasst ist, um eine Kredit- bzw. Guthabeninformation zu dem Bankserver (4005) zu senden und davon zu empfangen, und zwar über eine Netzwerkkommunikationsverbindung.

6. Interaktives Spiel- und audiovisuelles Übertragungssystem, wie in irgendeinem vorhergehenden Anspruch beansprucht, bei welchem der Empfänger/Dekoder (2020) angepasst ist, um über den Kommunikationsserver (3022) eine Spielinformation zu dem zentralen Spielcomputermittel (4002) während einer Spieloperation zu übermitteln.

7. Interaktives Spiel- und audiovisuelles Übertragungssystem, wie in Anspruch 6 beansprucht, bei welchem der Empfänger/Dekoder (2020) angeordnet bzw. ausgelegt ist, um eine gewisse oder die gesamte Spielinformation, die von dem Empfänger/Dekoder (2020) zu dem zentralen Spielcomputermittel (4002) während des Spielens übertragen wird, zu verschlüsseln.

8. Interaktives Spiel- und audiovisuelles Übertragungssystem, wie in Anspruch 7 beansprucht, bei welchem der Kommunikationsserver (3022) angepasst ist, um eine verschlüsselte Spielinformation zu entschlüsseln, die von dem Empfänger/Dekoder (2020) empfangen wird, und um diese Information neu zu verschlüsseln, und zwar für eine darauffolgende Kommunikation zu dem zentralen Spielcomputermittel (4002).

9. Interaktives Spiel- und audiovisuelles Übertragungssystem, wie in irgendeinem vorhergehenden Anspruch beansprucht, das ein Übertragungsmittel (2008) umfasst, um die audiovisuellen Daten und gewisse oder alle Spieldaten zu dem Empfänger/Dekoder (2020) zu übertragen.

10. Interaktives Spiel- und audiovisuelles Übertragungssystem, wie in irgendeinem der Ansprüche 1 bis 8 beansprucht, bei welchem das zentrale Spielcomputermittel angeordnet bzw. ausgelegt ist, um gewisse oder alle Spieldaten zu dem Empfänger/Dekoder (2020) über den Kommunikationsserver (3022) zu senden.

11. Interaktives Spiel- und audiovisuelles Übertragungssystem, wie in irgendeinem vorhergehenden Anspruch beansprucht, bei welchem das Ereignis ein Echtzeit-Sportereignis umfasst.

12. Verfahren zum Ermöglichen eines interaktiven Spielens in Verbindung mit einem gesendeten audiovisuellen Ereignis, wobei das Verfahren die folgenden Schritte umfasst:
gesendete audiovisuelle Daten, die sich auf ein Sendeereignis beziehen, werden empfangen, und von einem zentralen Spielcomputermittel (4002) werden Spieldaten, die sich auf das Sendeereignis beziehen, empfangen;
mit der Teilnehmer- bzw. Abonnentenkarte eines Benutzers wird interagiert, um einen Benutzerzugriff zu einem Sendeereignis bereitzustellen;
mit der Bankkarte eines Benutzers wird interagiert, um Daten zu lesen, die darauf gespeichert sind; und
Daten, die von der Bankkarte des Benutzers gelesen wurden, werden zu einem Kommunikationsserver (3022) übermittelt, der mit einem Bankserver (4005) verbunden ist, der das Bankkonto des Benutzers hält, um in Antwort auf die Daten einen Kredit bzw. ein Guthaben von dem Bankkonto des Benutzers zu einem Spielkonto bei dem zentralen Spielcomputermittel (4002) zu übertragen, um ein Spielen in Verbindung mit dem Sendeereignis zu ermöglichen.

13. Verfahren, wie in Anspruch 12 beansprucht, bei welchem die Daten, die zu dem Kommunikationsserver (3022) übermittelt werden, in der Form eines elektronischen Zertifikats sind, das von der Bankkarte in Antwort auf Transaktionsdaten, die dorthin übermittelt werden, erzeugt wird.

14. Verfahren, wie in Anspruch 12 oder 13 beansprucht, bei welchem das zentrale Spielcomputermittel (4002) Kredit- bzw. Guthabeninformation zu dem Bankserver (4005) überträgt und von dort empfängt, und zwar über eine Netzwerkkommunikationsverbindung.

15. Verfahren, wie in irgendeinem der Ansprüche 12 bis 14 beansprucht, bei welchem über den Kommunikationsserver eine Spielinformation zu, dem zentralen Spielcomputermittel (4002) während einer Spieloperation (3022) übermittelt wird.

16. Verfahren, wie in Anspruch 15 beansprucht, bei welchem eine gewisse oder die gesamte Spielinformation, die zu dem zentralen Spielcomputermittel (4002) während des Spielens übermittelt wird, verschlüsselt ist.

17. Verfahren, wie in Anspruch 16 beansprucht, bei welchem der Kommunikationsserver (3022) empfangene verschlüsselte Spielinformation entschlüsselt und diese Information für eine darauffolgende Kommunikation zu dem zentralen Spielcomputermittel (4002) neu verschlüsselt.

18. Verfahren, wie in irgendeinem der Ansprüche 12 bis 17 beansprucht, bei welchem gewisse oder alle Spieldaten mit den audiovisuellen Daten empfangen werden.

19. Verfahren, wie in irgendeinem der Ansprüche 12 bis 17 beansprucht, bei welchem gewisse oder alle Spieldaten von dem zentralen Spielcomputermittel (4002) über den Kommunikatiosserver (3022) empfangen werden.

20. Verfahren, wie in irgendeinem der Ansprüche 12 bis 19 beansprucht, bei welchem das Ereignis ein Echtzeit-Sportereignis umfasst.

## Revendications

1. Système de transmission audiovisuelle et de jeu interactif comportant :
des moyens centraux formant ordinateur de jeu (4002) servant à traiter des données de jeu ; et
un récepteur/décodeur (2020) servant à recevoir des données audiovisuelles diffusées relatives à un événement diffusé ainsi que des données de jeu relatives à l'événement diffusé issues des moyens centraux formant ordinateur de jeu (4002) ; le récepteur/décodeur comprenant :
un dispositif de lecture de carte d'abonnement (2030) servant à interagir avec la carte d'abonnement (3020) d'un utilisateur pour donner à un utilisateur l'accès à un événement diffusé ;
un dispositif de lecture de carte bancaire (2031) servant à interagir avec la carte bancaire d'un utilisateur pour lire des données qui y sont mémorisées ; et
un dispositif modem (2028) servant à communiquer les données lues sur la carte bancaire de l'utilisateur à un serveur de communications (3022) relié à un serveur de banque (4005) tenant le compte bancaire de l'utilisateur, et ce, pour transférer, en réponse auxdites données, de l'argent du compte bancaire de l'utilisateur à un compte de jeu au niveau des moyens centraux formant ordinateur de jeu (4002) pour permettre de jouer en liaison avec l'événement diffusé.

2. Système de transmission audiovisuelle et de jeu interactif selon la revendication 1, dans lequel les données communiquées au serveur de communications (3022) le sont sous forme de certificat électronique produit par la carte bancaire en réponse aux données de transaction présentées par le récepteur/décodeur.

3. Système de transmission audiovisuelle et de jeu interactif selon la revendication 1 ou 2, dans lequel le récepteur/décodeur (2020) est pourvu d'une télécommande manuelle (2044) servant à envoyer des données au récepteur/décodeur, la télécommande manuelle (2044) étant agencée pour crypter certaines ou l'ensemble des données envoyées au récepteur/décodeur (2020), le récepteur/décodeur étant agencé pour décrypter ensuite les données cryptées (2020).

4. Système de transmission audiovisuelle et de jeu interactif selon l'une quelconque des revendications précédentes, dans lequel le serveur de communications (3022) est conçu pour communiquer avec les moyens centraux formant ordinateur de jeu (4002).

5. Système de transmission audiovisuelle et de jeu interactif selon l'une quelconque des revendications précédentes, dans lequel les moyens centraux formant ordinateur de jeu (4002) sont conçus pour recevoir des informations de paiement issues du serveur de banque (4005) et pour transmettre des informations de paiement à ce dernier par l'intermédiaire d'une liaison de communication de réseau.

6. Système de transmission audiovisuelle et de jeu interactif selon l'une quelconque des revendications précédentes, dans lequel le récepteur/décodeur (2020) est conçu pour, au cours du jeu, communiquer des informations de jeu aux moyens centraux formant ordinateur de jeu (4002) par l'intermédiaire dudit serveur de communications (3022).

7. Système de transmission audiovisuelle et de jeu interactif selon la revendication 6, dans lequel le récepteur/décodeur (2020) est agencé pour crypter certaines ou l'ensemble des informations de jeu envoyées du récepteur/décodeur (2020) aux moyens centraux formant ordinateur de jeu (4002) au cours du jeu.

8. Système de transmission audiovisuelle et de jeu interactif selon la revendication 7, dans lequel le serveur de communications (3022) est conçu pour décrypter les informations de jeu cryptées reçues en provenance du récepteur/décodeur (2020) et pour crypter à nouveau ces informations en vue de les communiquer ensuite aux moyens centraux formant ordinateur de jeu (4002).

9. Système de transmission audiovisuelle et de jeu interactif selon l'une quelconque des revendications précédentes, comportant des moyens d'émission (2008) servant à transmettre lesdites données audiovisuelles et . certaines ou l'ensemble desdites données de jeu au récepteur/décodeur (2020).

10. Système de transmission audiovisuelle et de jeu interactif selon l'une quelconque des revendications 1 à 8, dans lequel lesdits moyens centraux formant ordinateur de jeu sont agencés pour envoyer certaines ou l'ensemble des données de jeu au récepteur/décodeur (2020) par l'intermédiaire dudit serveur de communications (3022).

11. Système de transmission audiovisuelle et de jeu interactif selon l'une quelconque des revendications précédentes, dans lequel ledit événement comprend un événement sportif en temps réel.

12. Procédé permettant de jouer de manière interactive en liaison avec un événement audiovisuel diffusé, ledit procédé comprenant les étapes suivantes :
réception, d'une part, de données audiovisuelles diffusées relatives à un événement diffusé et, d'autre part, de données de jeu relatives à l'événement diffusé en provenance de moyens centraux formant ordinateur de jeu (4002) ;
interaction avec la carte d'abonnement d'un utilisateur afin de donner à l'utilisateur accès à un événement diffusé ;
interaction avec la carte bancaire d'un utilisateur afin de lire des données qui y sont mémorisées ; et
communication de données lues sur la carte bancaire de l'utilisateur à un serveur de communications (3022) relié à un serveur de banque (4005) tenant le compte bancaire de l'utilisateur, et ce, pour transférer, en réponse auxdites données, de l'argent du compte bancaire de l'utilisateur à un compte de jeu au niveau des moyens centraux formant ordinateur de jeu (4002) pour permettre de jouer en relation avec l'événement diffusé.

13. Procédé selon la revendication 12, dans lequel les données communiquées au serveur de communications (3022) le sont sous forme de certificat électronique produit par la carte bancaire en réponse aux données de transaction qui lui sont présentées.

14. Procédé selon la revendication 12 ou 13, dans lequel les moyens centraux formant ordinateur de jeu (4002) reçoivent des informations de paiement en provenance du serveur de banque (4005) et transmettent des informations de paiement à ce dernier par l'intermédiaire d'une liaison de communication de réseau.

15. Procédé selon l'une quelconque des revendications 12 à 14, dans lequel les informations de jeu sont communiquées aux moyens centraux formant ordinateur de jeu (4002) par l'intermédiaire dudit serveur de communications (3022) au cours du jeu.

16. Procédé selon la revendication 15, dans lequel certaines ou l'ensemble des informations de jeu communiquées en cours de jeu aux moyens centraux formant ordinateur de jeu (4002) sont cryptées.

17. Procédé selon la revendication 16, dans lequel le serveur de communications (3022) décrypte les informations de jeu reçues cryptées et crypte à nouveau ces informations pour les communiquer ensuite aux moyens centraux formant ordinateur de jeu (4002).

18. Procédé selon l'une quelconque des revendications 12 à 17, dans lequel certaines ou l'ensemble desdites données de jeu sont reçues avec lesdites données audiovisuelles.

19. Procédé selon l'une quelconque des revendications 12 à 17, dans lequel certaines ou l'ensemble des données de jeu sont reçues en provenance des moyens centraux formant ordinateur de jeu (4002) par l'intermédiaire dudit serveur de communications (3022).

20. Procédé selon l'une quelconque des revendications 12 à 19, dans lequel ledit événement comprend un événement sportif en temps réel.
